# EUROPEAN PATENT SPECIFICATION

(11) **EP 1 676 121 B1**
(45) Date of publication and mention of the grant of the patent: **05.01.2011**
(21) Application number: 04775524.4
(22) Date of filing: 07.10.2004
(51) Int. Cl.: G01N 21/41, G01M 11/02, G03H 1/00

(54) **METHOD FOR HOLOGRAPHIC REFRACTOMETRY**
VERFAHREN ZUR HOLOGRAPHISCHEN REFRAKTOMETRIE
PROCEDE DE REFRACTOMETRIE HOLOGRAPHIQUE

(30) Priority: 09.10.2003 SE 0302676
(43) Date of publication of application: 05.07.2006
(73) Proprietor: Phase Holographic Imaging PHI AB, 224 75 Lund (SE)
(72) Inventor: GUSTAFSSON, Mats, S-211 42 Malmö (SE); SEBESTA, Mikael, S-211 50 Malmö (SE); EGELBERG, Peter, S-224 75 Lund (SE); LENART, Thomas, S-226 46 Lund (SE); PETTERSSON, Sven-Göran, S-247 32 Södra Sandby (SE); BENGTSSON, Bengt, S-240 14 Veberöd (SE)
(74) Representative: Henriksson, Dan Ragnar Mikael
(86) International application number: PCT/SE2004/001437
(87) International publication number: WO 2005/033679

(56) References cited:
- EP-A1- 0 974 829
- WO-A1-03/048868
- DE-A1- 2 133 803
- US-A- 4 565 449

## Description

### AREA OF INVENTION

The present invention relates to a method for holographic refractometry useful for the comparision of refractive index between an object and a surrounding medium using digital holography, and for determining the number of particles of two substances in a sample.

### PRIOR ART

A commonly known method for determination of refractive index of small inhomogenous, transparent objects is the method known as the Becke method. The Becke method involves placing the object in a medium having a known refractive index, for example a Refractive Index Liquid. The sample is arranged in a microscope and light is passed through the sample. The person using the microscope moves the focal plane upwards (or downwards). The Becke lines seem to move outwards or inwards relative to the contour of the object. The movement of the Becke lines is dependent on whether the refractive index of the object is lower or higher than the refractive index of the surrounding medium. By placing the object in several media having different refractive index and observing when the movement of the contour change direction as the focal plane is moved upwards, the refractive index of the object may be determined. Thus, the Becke method of determining refractive index of an object is an indirect method.

The Becke method involves that a person has to move the focal plane of the microscope by hand while observing the movement of the contours of the object. Thus, the method does not lend itself for automation. Moreover, the analysis has to be performed at site. Thus, it is not possible to make an image of the object and to analyze the image afterwards in another environment or at another time. Other methods of measuring refractive index are the phase contrast method and the oblique illumination method, see for example W. D. Nesse, "Introduction to optical Mineralogy", Oxford University Press, New York, second edition, 1991.

Refractometry has applications in different sciences. The index of refraction is material specific, which is useful in identification of different substances in a blend. In pharmacology, particle size characterization and distribution of chemical substances play an important role in research and manufacturing. In mineralogy, the index of refraction is an important parameter in classifying different minerals.

Holographic methods are common today. For example DE2133803 discloses a holographic method according to which refractive index changes can be observed. The document does not deal in detail with how such measurement is performed.

US 4 565 449 discloses a method and an apparatus for determining refractive index of a cylindrical test object, which is transparent to luminous radiation.

### SUMMARY OF THE INVENTION

Accordingly, it is an objective of the invention to provide a method that makes it possible to automate the process of measuring the refractive index of an object. In particular, it is an object to provide a method for counting the number of particles having a first refractive index and counting the number of particles having a second refractive index in a specific area of a sample.

Another objective of the invention is to provide a method that enables remote analyzing of the refractive index of an object at any time after that an image of the object has been obtained.

These objectives are met by a method according to claim 1. It is further disclosed a method and device for determining refractive index of an object compared to a refractive index of a surrounding medium, by exposing said sample to a laser object beam and letting the object beam interfere with a laser reference beam to obtain a hologram, analyzing the hologram for phase information, and determining if the refractive index of the object is higher or lower than the refractive index of the surrounding medium based on said phase information. The method may be performed by a computer.

The method may be used for counting the number of particles having a first refractive index and counting the number of particles having a second refractive index in a specific area of said sample if the object has particles of a first substance having a first refractive index and a second substance having a second refractive index and a medium having a refractive index between said first and second refractive index. In this way the relationship between the substances may be calculated.

### BRIEF DESCRIPTION OF THE DRAWINGS

Further objects, features and advantages of the invention will become apparent from the following description of several embodiments of the invention with reference to the drawings, in which:
Fig. 1 is a schematic diagram of an experimental setup for performing the method according to the invention,
Fig. 2 is a schematic diagram of an object comprising wave fronts moving beyond the object,
Fig. 3 is a schematic diagram showing a phase analysis of a hologram obtained of the object of Fig. 2,
Fig. 4 is a photograph showing a microscope view of a sample comprising objects according to a comparative example, and
Fig. 5 is a photograph showing a microscope view of a sample illustrating an aspect of the invention.

### DETAILED DESCRIPTION OF EMBODIMENTS

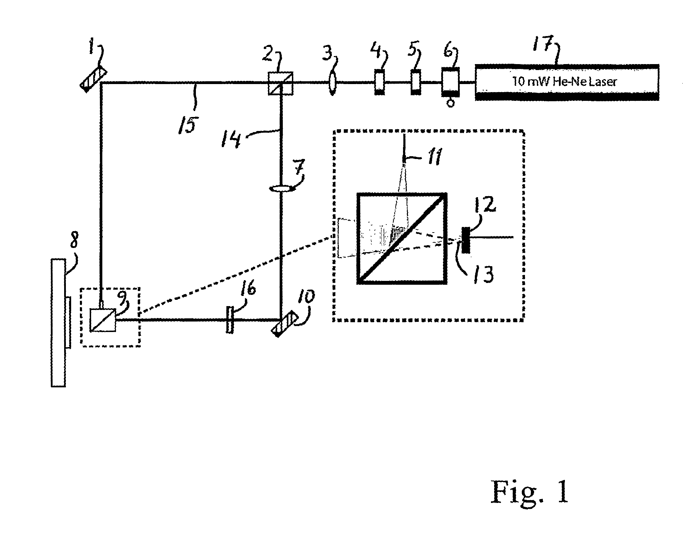

Fig. 1 is a schematic diagram of an experimental setup of a Fourier holography equipment. The equipment comprises a JDS Uniphase 10 mW He-Ne laser 17 emitting light at the wavelength of 633 nm. The light passes a shutter 6, a first polarizer 5 and a second polarizer 4. By the polarizers, the intensity of the laser beam may be adjusted.

Thence, the laser beam passes a first halfwave plate 3 and reaches a polarizing beam splitter 2 dividing the beam into an object beam 14 and a reference beam 15. The object beam 14 passes a second halfwave plate 7 and is diverted 90 degrees by a mirror 10. Thence, the object beam passes an Iris diaphragm 16 and reaches a beam splitter 9. The reference beam 15 is diverted by a mirror 1 towards the beam splitter 9 and passes a GRIN lens 11, which diverts the reference beam 15 as shown in the enlarged section of Fig. 1.

An object 12 is arranged close to the beam splitter 9. The laser beam passing through the object is collected by a sensor 8. The reference beam is diverted towards the sensor 8 by the beam splitter 9, whereby the sensor 8 comprehends the reference beam as originating from a virtual point source 13 close to the object.

By means of the two halfwave plates, the intensity in the reference beam and the object beam may be controlled and at the same time keep the polarization of the fields linear.

The experimental digital holograpy setup implies a spherical reference point source close to the illuminated object. This gives approximately the same curvature of the reference field and the object field and hence low spatial frequencies of the hologram. To achieve a large numerical aperture of the reference field and keep the point source close to the object, a 0.25 pitch GRIN lens is used to widen the reference beam. The GRIN lens has a numerical aperture of 0.37, a diameter of 1.0 mm and is placed in a holder close to the beam splitter. The reference point source is thereby reflected by the beam splitter to the sensor. The arrangement with the beam splitter gives a virtual point source which can be placed close to the object.

In the experimental setup, it is not possible to measure the object field directly. Instead an approximation of the object field and the reference field, i.e. a sampled version of the interference pattern, is measured by the sensor. The object field is used to determine an image of the object. The evaluation of the object field is performed in a computer by means of FFT (fast Fourier transforms).

The experimental setup described so far may be altered in different applications. For example, the Iris diafragm 16 may be omitted as well as the members 3, 4, 5, 6 and/or 7. The laser beams can be confined to a closed region with optical fibers and hence eliminate the mirrors 1 and 10, etc.

In the method according to the invention, it is possible to see transparent objects, such as biological specimens, without any preparation. To the contrary, in the prior art, specimens are routinely stained. This approach is unsatisfactory in many respects. The stain, for example, kills a specimen whose life processes may be under study.

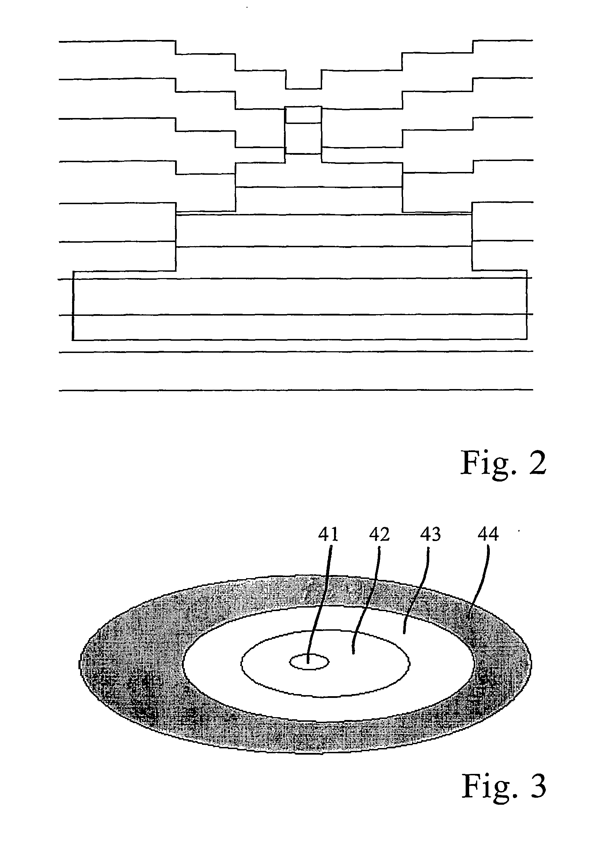

In Fig. 2, a transparent object is shown. The object does not absorb any light, but the light that travels through the object will experience a difference in the optical path length. The wave front that emerges from the object will thus be phase shifted. This distortion can be detected with holography as phase differences and for example be represented as a hue difference on a computer printout.

Fig. 3 shows a hologram print-out of the object according to Fig. 2, in which the different heights are displayed as different phases represented by different colors. Thus, the inner circle may be blue 41, the next ring 42 green, the following ring 43 yellow and the outer ring 44 red.

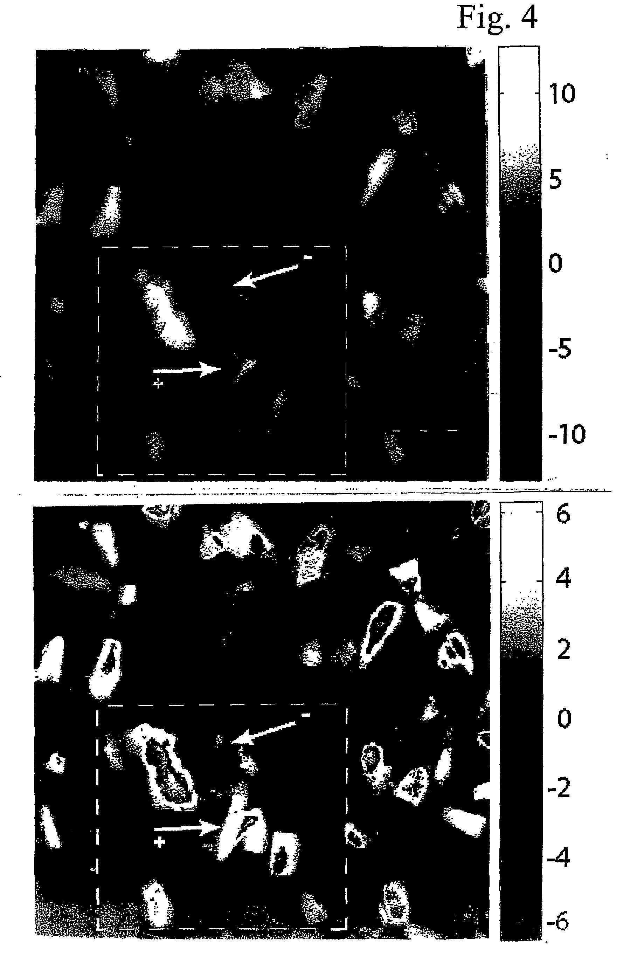

Fig. 4, which illustrates a comparative example, is a phase image of lactose crystals mounted in a liquid with nₘ = 1.542 at the wavelength 589 nm. The phase increases (decreases) when going from an object with higher (lower) refractive index to an object with lower (higher) refractive index. The photograph at the top is the unwrapped phase image and the photograph at the bottom is the re-wrapped phase image.

In the present invention, a single hologram is obtained. A hologram comprises information of several focal planes. Consequently, it is possible to maintain the hologram and later analyze it according to the Becke method. The computer may be programmed to produce images of the crystals at different focal depth and the movement of the contours of the crystals may be visualized.

Furthermore, it is observed that a hologram comprises phase information. By programming the computer to indicate the phase of the laser light from the object, it is possible to generate an image, in which the phase is displayed, for example as different colors or hues.

It has been observed that the phase order is different depending on whether the object has a refractive index, which is larger or smaller than the surrounding liquid refractive index.

Thus, in a comparative example, the index of refraction of an isotropic object can be determined with repeated measurement where the surrounding medium or liquid is changed until the phase order has been reversed. The index of refraction for the object is then between the indexes of refraction for the two liquids having different phase order.

Moreover, according to the claimed method two different isotropic objects can be separated if the surrounding liquid is matched somewhere between the indexes of refraction for the two objects.

Such separation may for example be performed for chrystals of Sodium Chloride NaCl and chrystals of Potassium Chloride KCl. Chrystals having an average size of about 40 µm were used. These chrystals are isotropic, i.e. they have one index of refraction irrespectively of the direction of illumination. Their respective indices of refraction are denoted n_{NaCl} and n_{KCl}. The crystals are mounted in a refractive index liquid with a refractive index denoted *n*ₘ, such that the refractive indices are ordered as *n*_{KCl} < *n*ₘ < *n*_{NaCl}.

The phase is changed when going through the crystals. The phase shift can be observed as a color change from black, over gray, to white and back to black.

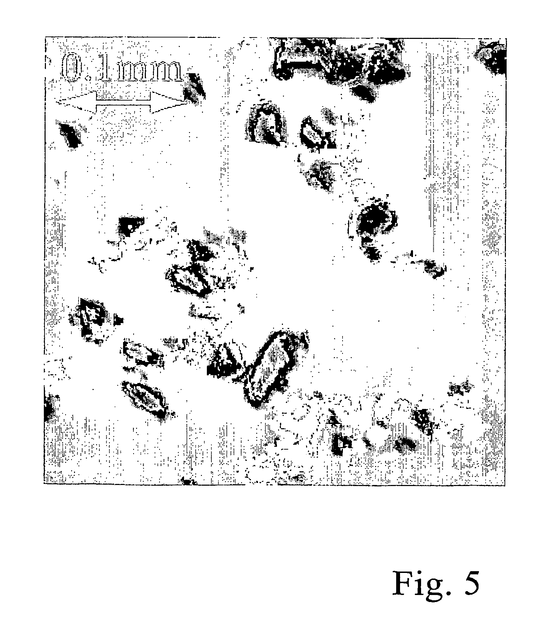

To obtain an image that depicts the optical thickness of the sample, the phase is unwrapped and the large scale phase variation of the illuminating wave is removed by fitting the unwrapped phase image to a polynomial. In these unwrapped and background corrected phase images the images depict the contrast in refractive index times the propagation length through each crystal. Moreover, to improve the interpretation of the unwrapped background corrected phase images, the phase is plotted as a contour plot with 2_{Π} between each contour. In the contour plot, positive values are represented as darker colors and negative values as brighter colors; see Fig. 5.

In this way, the crystals may be counted or the volume distribution may be calculated.

Anisotropic objects have different indexes of refraction in different directions. The co-polarized part of the scattered light from an anisotropic object seems to have been scattered by an isotropic object with an effective index of refraction n'. By multiple exposures of the same object with a step by step rotation of the polarization of the illuminating light, the smallest and the largest of the principal refractive indexes can be extracted according to a comparative example. The anisotropic objects considered here are uniaxial, i.e. they have one optical axis where the index of refraction varies with polarization.

Fig. 4, which illustrates a comparative example, shows an object consisting of lactose crystals. These crystals are anisotropic and have different refraction indexes in different directions. These crystals are arranged in a liquid having a refractive index of 1.542, for example a Cargille Refractive Index Liquid that may be obtained with predefined refractive index. The wrapped phase image is improved by an approximation to a two-dimensional phase unwrapping algorithm, whereby large scale phase variation of the illuminated wave is removed. Finally, the unwrapped phase image may be re-wrapped to the range of -2π to +2π.

The image is calculated by a computer and may be displayed as different shades of gray or as colors. The computer may be programmed to determine the number of objects that have a refractive index larger than or smaller than the refractive index of the surrounding medium.

As appears from Fig. 4, some of the particles are white and some of the particles are black, indicating whether the refractive index of the relevant particle is above or below the refractive index of the surrounding medium.

For example, if the method of the claimed invention is to be used for determining the relationship between the number of particles of two isotropic substances having different refractive index, a medium is used with a refractive index in between the refractive indexes of the substances. In the processed hologram, the substances will appear as particles having different gray shade compared to the surrounding medium, for example substantially white and substantially black particles. The computer may be programmed to count the number of particles of each type on a specific surface area of the sample. Thus, the relationship between the two substances may be fully automatically calculated by the computer. The computer may as well be programmed to calculate the surface that each type of particles occupy. In the case of known indices of refraction, the computer may also be programmed to calculate the volume ratio between the two particles.

The method according to the invention lends itself to automatization so that the control of the blend of particles of substances in a batch may be controlled continuously over time by arranging samples continuously and performing the method as described above. Up to now, there is no reliable real time method of making such measurements.

The invention has been described above with reference to a specific embodiment of the invention shown on the drawings. However, a skilled person reading this specification may realize other combinations of the different features indicated in the embodiment, and such other combinations are intended to be within, the scope of the invention. The invention is only limited by the appended patent claims.

## Claims

1. Method of determining the number of particles of two substances in a sample, said sample comprising particles of a first substance having a first refractive index, particles of a second substance having a second refractive index, and a surrounding medium having a refractive index between said first and second refractive indices, said method comprising the steps of:
exposing said sample to a laser object beam and letting the object beam interfere with a laser reference beam to obtain a hologram;
analyzing the hologram for phase information;
determining if the refractive indices of the particles of said first and second substances are higher or lower than the refractive index of the surrounding medium based on said phase information; and counting the number of particles having a first refractive index and counting the number of particles having a second refractive index in a specific area of said sample.

2. The method as claimed in claim 1, **characterized in that** said analyzing and determination are performed by a computer.

3. Use of the method of any one of claims 1 and 2 for the separation and counting particles in a particle blend.

4. Use of the method of any one of claims 1 and 2 for calculating the volume ratio between particles in a particle blend.

## Patentansprüche

1. Verfahren zum Bestimmen der Teilchenanzahl von zwei Substanzen in einer Probe, wobei die Probe Teilchen einer ersten Substanz, die eine erste Brechungszahl aufweist, Teilchen einer zweiten Substanz, die eine zweite Brechungszahl aufweist, und ein umgebendes Medium, das einen Brechungszahl zwischen den ersten und zweiten Brechungszahlen aufweist, umfasst, wobei das Verfahren folgende Schritte umfasst:
Aussetzen der Probe an einen Laserobjektstrahl und Interferierenlassen des Objektstrahls mit einem Laserreferenzstrahl, um ein Hologramm zu erzielen;
Analysieren des Hologramms auf Phaseninformationen;
Bestimmen, ob die Brechungszahlen der Teilchen der ersten und zweiten Substanzen höher oder niedriger sind als die Brechungszahl des umgebenden Mediums, basierend auf den Phaseninformationen; und Zählen der Anzahl von Teilchen, die eine erste Brechungszahl aufweisen; und
Zählen der Anzahl von Teilchen, die eine zweite Brechungszahl in einem spezifischen Bereich der Probe aufweisen.

2. Verfahren nach Anspruch 1, **dadurch gekennzeichnet, dass** das Analysieren und das Bestimmen von einem Computer durchgeführt werden.

3. Verwendung des Verfahrens nach einem der Ansprüche 1 und 2 zum Trennen und Zählen von Teilchen in einer Teilchenmischung.

4. Verwendung des Verfahrens nach einem der Ansprüche 1 und 2 zum Berechnen des Volumenverhältnisses zwischen den Teilchen in einer Teilchenmischung.

## Revendications

1. Procédé de détermination du nombre de particules de deux substances dans un échantillon, ledit échantillon comprenant des particules d'une première substance ayant un premier indice de réfraction, les particules d'une deuxième substance ayant un deuxième indice de réfraction, et un milieu environnant ayant un indice de réfraction entre ledit premier indice de réfraction et ledit deuxième indice de réfraction, ledit procédé comprenant les étapes consistant à :
exposer ledit échantillon à un faisceau objet laser et laisser le faisceau objet interférer avec un faisceau de référence laser pour obtenir un hologramme ;
analyser l'hologramme pour des informations de phase ;
déterminer si les indices de réfraction des particules de ladite première substance et de ladite deuxième substance sont supérieurs ou inférieurs à l'indice de réfraction du milieu environnant sur la base desdites informations de phase ; et
compter le nombre de particules ayant un premier indice de réfraction et compter le nombre de particules ayant un deuxième indice de réfraction dans une zone spécifique dudit échantillon.

2. Procédé selon la revendication 1, **caractérisé en ce que** ladite analyse et ladite détermination sont effectuées par un ordinateur.

3. Utilisation du procédé selon l'une quelconque des revendications 1 et 2 pour séparer et compter des particules dans un mélange de particules.

4. Utilisation du procédé selon l'une quelconque des revendications 1 et 2 pour calculer le rapport de volume entre les particules dans un mélange de particules.
